## Europäisches Patentamt

## European Patent Office

## Office européen des brevets

(19)

(11) Numéro de publication: **0 176 385 B1**

(12) **FASCICULE DE BREVET EUROPEEN**

(45) Date de publication du fascicule du brevet:
**09.03.88**

(51) Int. Cl.⁴: $B\ 63\ B\ 9/06$

(21) Numéro de dépôt: **85401616.9**

(22) Date de dépôt: **07.08.85**

(54) Moule transformable, par exemple pour la réalisation d'une coque de bateau et son procédé de fabrication.

(30) Priorité: **31.08.84 FR 8413506**

(43) Date de publication de la demande:
**02.04.86 Bulletin 86/14**

(45) Mention de la délivrance du brevet:
**09.03.88 Bulletin 88/10**

(84) Etats contractants désignés:
**AT BE CH DE FR GB IT LI LU NL SE**

(56) Documents cités:
**CH - A - 560 581**
**GB - A - 582 794**
**US - A - 1 392 130**
**US - A - 1 406 117**
**US - A - 2 431 100**
**US - A - 2 519 508**

(73) Titulaire: **ENGINEERING, MANAGEMENT, DATA PROCESSING (E.M.D.P) Société dite :, C.I.T. P.O.B. 37 3,rue de l'ARRIVEE, F-75749 Paris Cedex 15 (FR)**

(72) Inventeur: **Desport, Lucien André, 114 Avenue Mozart, F-75 016 Paris (FR)**

ACTORUM AG

## Description

La présente invention est relative aux moules et à leur procédé de fabrication. Elle vise plus particulièrement des moules pour mouler des objets ayant des surfaces non développables. L'invention sera illustrée tout particulièrement sur l'exemple d'une coque de bateau, mais il va de soi qu'elle peut s'appliquer à d'autres objets moulées à l'aide d'un moule femelle simple, d'un moule mâle simple, ou d'un moule fermé, les objets pouvant être constitués notamment en résine de polyester, en résine époxydique, ou en autre résine thermodurcissable, en ciment ordinaire ou en toute autre matière convenable.

Le brevet US-A-1 406 117 décrit un équipement permettant la réalisation de lattes de formes variées pourvu qu'elles soient planes, mais non le moulage de surfaces non développables.

On sait déjà mouler des coques de navires à l'aide d'un moule. Tout changement de dimension ou de forme de la coque nécessite l'utilisation d'un moule différent. Ce procédé est coûteux.

L'invention pallie cet inconvénient par un moule transformable conforme à la revendication 1 dont la plus grande partie peut servir à mouler des coques de dimensions et de formes différentes.

D'autres caractéristiques du moule ressortent des sous-revendications.

Pour transformer le moule, il suffit donc de modifier la position des têtes et d'y appliquer ensuite les lattes et les nappes. Comme les éléments du bâti qui, de préférence, est démontable, les porte-tête, les moyens pour les fixer en des positions différentes et les têtes représentent la partie la plus coûteuse du moule, on réalise ainsi un moule universel qui permet de mouler tous les bateaux.

Pour que chaque rangée de têtes définisse une courbe que la latte primaire suivra sans déformation au point de contact il convient, d'une manière générale, que l'une des dimensions linéaires de la surface de contact d'une tête avec la latte primaire soit inférieure au 1/500 environ du rayon de courbure de la latte en cet emplacement. En général, la surface de contact d'une tête avec une latte est comprise entre 2 mm et 10 mm.

En général, on dispose les rangées de tête de manière qu'elles définissent les couples du bateau. Les lattes secondaires peuvent alors définir les lignes d'eau du bateau. Pour empêcher que les lattes secondaires ne se vrillent et pour qu'elles soient parallèles au plan tangent à la surface de la coque, il est de grande importance que la surface de contact de chaque tête puisse être orientée de manière à s'adapter aux lignes principales de la coque, soit en général les couples et les lignes d'eau. C'est pourquoi, suivant une caractéristique très préférée de l'invention, chaque tête est orientable dans deux directions qui diffèrent de celle, suivant laquelle s'étend son porte-tête.

On obtient les meilleurs résultats lorsque chaque tête est agencée de manière à pouvoir tourner autour de deux axes orthogonaux, dont l'un au moins est fictif. Ces deux axes ne sont pas nécessairement coplanaires. L'un d'entre eux, toujours fictif est, de préférence, dans le plan tangent du moule. L'autre peut être réel ou fictif et, dans ce dernier cas, passe de préférence par le point de contact de la tête avec la latte primaire. On supprime ainsi le mieux possible toute déformation locale des lattes aux emplacements où elles sont supportées.

Les lattes primaires doivent avoir une rigidité suffisante pour ne pas fléchir entre les points d'appui constitués par les têtes lorsqu'elles recevront la charge de la matière constitutive de la coque. A cet effet, on prévoit de rapprocher les têtes autant qu'il est nécessaire, encore qu'évidemment, chaque tête et les moyens qui permettent de la déplacer représentant un investissement coûteux, il est souhaitable d'avoir aussi peu de têtes que possible. Pour une coque de navire d'un poids de 85 kg/m², on peut adopter une distance entre les têtes d'un rangée comprise entre 0,30 m et 0,50 m. On peut également prévoir entre les têtes de simples supports des lattes. Enfin, pour obtenir le meilleur compromis entre la résistance que les lattes doivent présenter et la nécessité de les courber pour les mettre à la courbure requise par la forme de la coque, il est prévu de constituer les lattes primaires de stratifié ayant une rigidité supérieure à $35 \cdot 10^6$ kg/mm² et une flèche inférieure à 0,1 mm entre deux points d'appui distants de 0,35 m.

Le procédé de fabrication du moule transformable suivant l'invention conforme à la revendication 1 consiste à fabriquer les lattes primaires stratifiées par mise en place successive de couches formant des lattes unitaires sur une première couche supportée par les têtes. Chaque couche peut se déformer facilement sans avoir, cependant, la résistance requise, mais le stratifié ainsi formé a la résistance requise.

On peut rapprocher davantage les lattes secondaires, puisque, se faisant, on n'encourt guère de frais supplémentaires dus à la nécessité de mettre an œuvre davantage de têtes. C'est pourquoi, de préférence, la distance entre les lattes secondaires représente environ la moitié de celle qui sépare les lattes primaires, étant entendu qu'on peut compléter les lattes secondaires par des lattes diagonales.

Les nappes que l'on applique sur le treillis constitué de l'ensemble des lattes doivent avoir une souplesse suffisante pour prendre la forme de la surface recherchée, mais une rigidité suffisante pour tenir compte des efforts et donner une flèche inférieure par exemple à 0,1 mm.

On peut obtenir cette double caractéristique par des tissus de verre imprégnés de résine, notamment de résine de polyuréthane ayant sa plus grande résistance dans la direction de plus faible courbure de la coque.

Aux dessins annexés, donnés uniquement à titre d'exemples:

la figure 1 est une vue en perspective partielle d'un bâti sur lequel les lattes n'ont pas encore été placées;

la figure 2 est une vue en perspective partielle d'un bâti muni d'une première couche constitutive des lattes primaires;

la figure 3 est une vue semblable à la figure 2, mais alors que les lattes primaires stratifiées sont constituées;

la figure 4 est une vue semblable à la figure 3, alors que les lattes secondaires sont mises en place;

la figure 5 est une vue semblable à la figure 4, alors qu'un certain nombre de nappes sont mises en place;

la figure 6 est une vue en perspective du bâti et des porte-tête;

les figures 7 et 8 sont des vues en perspective illustrant deux modes de réalisation de têtes.

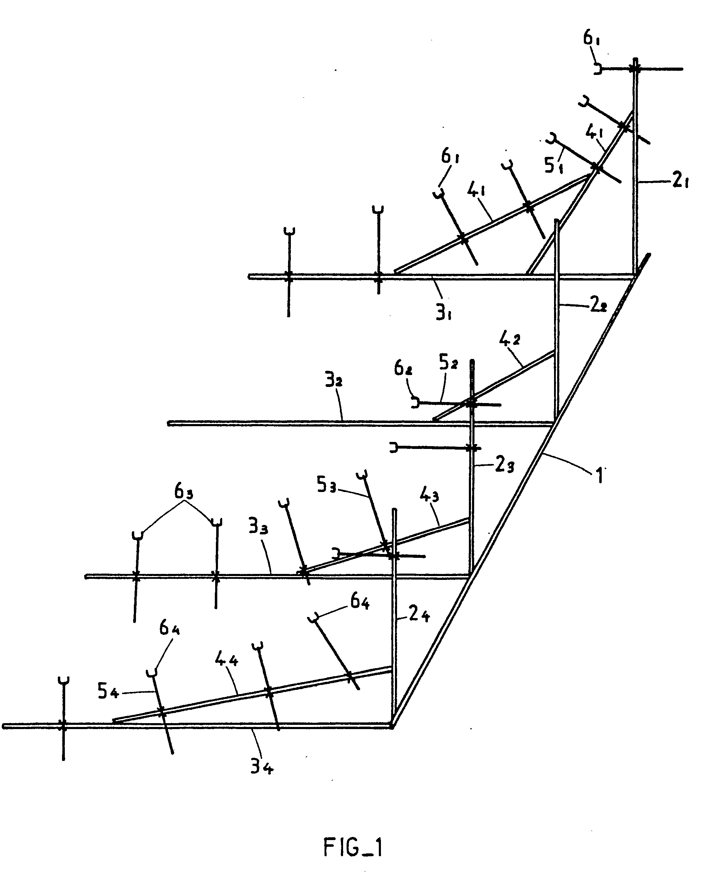

A la figure 1, le bâti est constitué d'une traverse 1 sur laquelle sont fixés des montants $2_1$, $2_2$, $2_3$ et $2_4$, et des longerons $3_1$, $3_2$, $3_3$, $3_4$ horizontaux. Sur ces montants et longerons sont fixées des barres $4_1$, $4_2$, $4_3$, $4_4$. Les deux barres $4_1$ s'étendent dans un plan parallèle à celui de la barre $4_2$ et les plans parallèles dans lesquels s'étendent les barres sont équidistants. Sur les longerons ainsi que, le cas échéant, sur les montants, sont montés des porte-tête $5_1$, $5_2$, $5_3$, $5_4$ qui, grâce é des systèmes à vérins ou à vissage, peuvent être déplacés de manière que les têtes $6_1$, $6_2$, $6_3$, $6_4$ portées par chaque porte-tête puissent prendre une position prescrite. La rangée de têtes $6_1$ définit ainsi une courbe qui correspond à la courbe d'un couple de la coque du bateau.

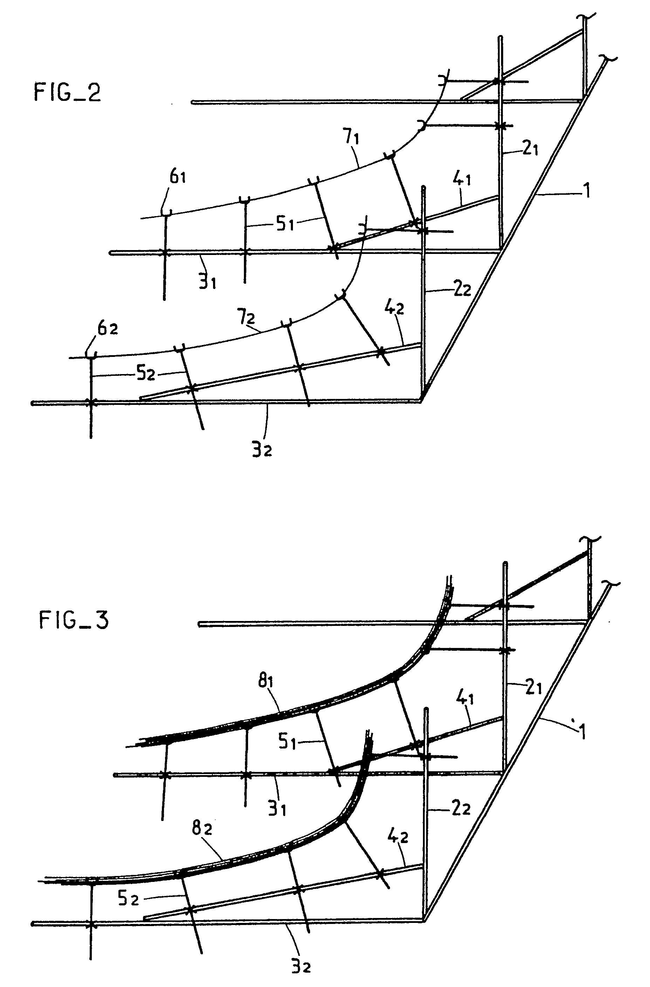

A la figure 2, une première couche $7_1$ de lattes primaires a été placée sur la rangée de têtes $6_1$ et une première couche $7_2$ sur la rangée de têtes $6_2$. A la figure 3, les premières couches $7_1$ et $7_2$ ont été complétées par quatre couches superposées de manière à créer les lattes primaires $8_1$, $8_2$. La première couche $7_2$ est une couche de polychlorure de vinyle de 2 mm, la deuxième couche est une couche de polyester de 2 mm, la troisième couche est une couche de polychlorure de vinyle de 14 mm, la quatrième couche est une couche de polyester de 2 mm et la cinquième couche est une couche de polychlorure de vinyle de 2 mm.

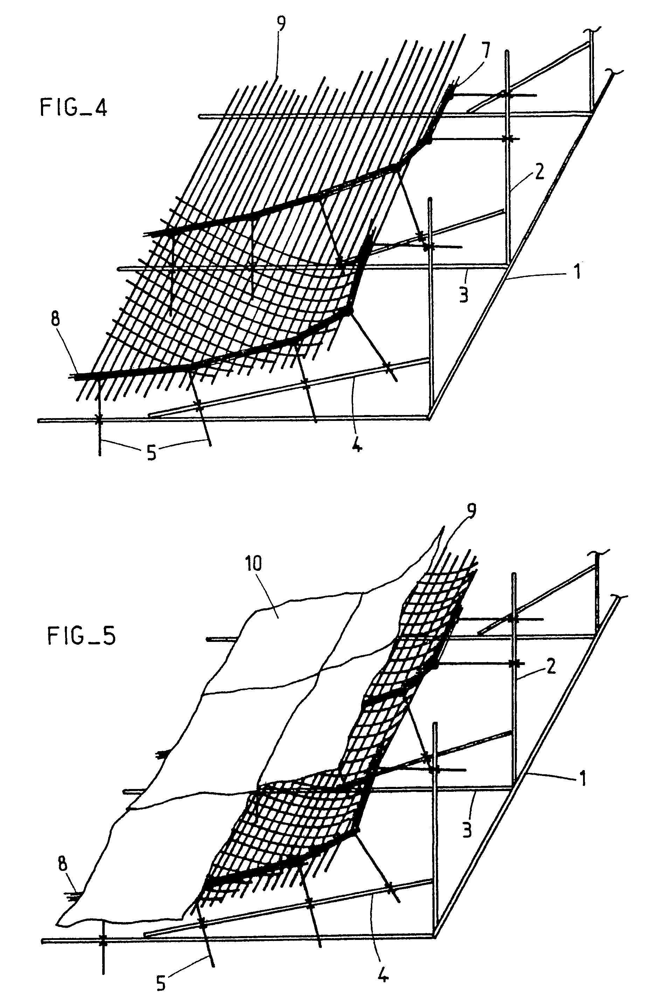

A la figure 4, des lattes 9 secondaires sont fixées par collage sur les lattes 8 primaires en leur étant perpendiculaires. Bien que cela n'ait pas été représenté à la figure 4, il est possible de constituer les lattes 9 de la même façon que les lattes 8 dans le cas où la courbure de ces lattes le nécessite.

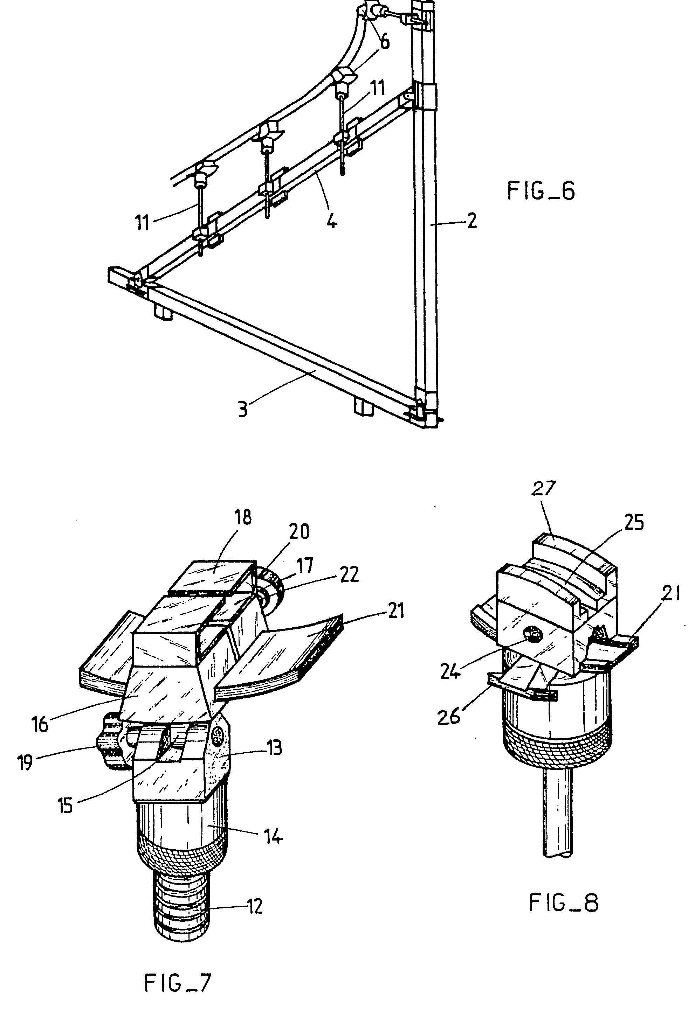

A la figure 5, des morceaux de nappe 10 ont été collés sur le treillis formé par les lattes 8 et 9 et ont été abouté les uns aux autres de manière à obtenir une surface qui forme le moule d'une coque de navire.

Lorsque le moulage est terminé, on enlève les lattes 8 et 9 et la nappe 10 et, pour mouler un bateau d'une autre forme, on modifie la position des têtes 6 en modifiant, si nécessaire, la disposition du bâti.

A la figure 6, on a illustré la manière dont on peut faire varier la position des têtes 6. Chaque tête est solidaire de la tige 11 d'un vérin de sorte que les têtes peuvent être déplacées suivant la direction dans laquelle s'étendent les tiges.

A la figure 7, est représentée une variante de têtes suivant l'invention. Une vis 12 solidaire d'une chape 13 et se vissant dans un écrou 14 permet de faire varier la distance de la tête à la barre 4. L'axe 15 de la chape 13 est solidaire d'une pièce 21, constituée d'un élément de cylindre circulaire à génératrice orthogonale à l'axe 15. En débloquant l'axe 15 par un bouton 19 on peut faire tourner la pièce 21 autour de cet axe 15. Une pièce 16, composée de deux mâchoires réunies par une vis 22, et enserrant la pièce 21, peut être déplacée sur la pièce 21 parallèlement aux génératrices de cette dernière ou être bloquée en position par l'intermédiaire d'un bouton de blocage 20. Des étriers 18, solidaires de la pièce 16, peuvent servir de support plan aux lattes primaires. Les positions respectives, orthogonales, de l'axe 15 et de l'axe du cylindre géométrique dont la pièce 21 est un élément permettent de donner une orientation quelconque prédéterminée au plan matérialisé par les étriers 18.

A la figure 8 est représentée une variante dans laquelle l'axe 15 de la figure 7 est remplacé par un élément de cylindre circulaire 26 dont l'axe est orthogonal à celui du cylindre de la pièce 21. La vis 22 et le bouton de blocage 20 sont remplacés par un axe 24 portant un excentrique et un bouton de rotation permettant de bloquer ainsi la pièce 16 sur la pièce 21. Les étriers 18 de la figure 7 sont remplacés par des mâchoires 27 pouvant venir serrer les lattes par le moyen d'une ou de plusieurs vis. Les mâchoires constituent ainsi des organes de préhension des lattes, montés de manière à pouvoir se décaler transversalement au plan de la rangée et à s'adapter ainsi au déplacement d'une latte dû à sa torsion.

**Revendications**

1. Moule transformable, notamment pour mouler des objets, tels qu'une coque de bateau, ayant des surfaces non développables dont des premières lignes s'étendent dans de premiers plans parallèles et dont de secondes lignes s'étendent dans de seconds plans parallèles qui coupent les premiers plans et sont incurvées différemment les unes des autres, comprenant un bâti (1, 2, 3) de barres (4) démontables, des rangées de porte-tête (5) montées sur les barres (4) de manière à pouvoir y être fixées en des positions différentes, chaque rangée (5) s'étendant dans l'un desdits premiers plans, et des têtes (6) portées par les extrémité des porte-tête (5), caractérisée par des lattes primaires (8) supportées par les têtes (6), chaque latte primaire (8) s'étendant le long d'une première ligne et étant supportée par toutes les têtes (6) d'une même rangée (5), par des lattes secondaires (9) entrecroisées avec les lattes primaires (8) et fixées sur celles-ci, les têtes (6) d'une même rangée étant orientées pour donner à leur latte primaire (8) une torsion telle que chaque latte secondaire (9) s'étende le long d'une seconde ligne, et par des nappes (10) appliquées sur les lattes secondaires (9).

2. Moule suivant la revendication 1, caractérisé en ce que l'une des dimensions linéaires de la surface de contact d'une tête (7) avec la latte primaire (8) est inférieure au 1/500ème environ du rayon de courbure de la latte en cet emplacement.

3. Moule suivant l'une des revendications 1 ou 2, caractérisé en ce que chaque tête (6) est orientable dans deux directions qui diffèrent de celle suivant laquelle s'étend son porte-tête.

4. Moule suivant la revendication 3, caractérisé en ce que chaque tête est agencée de manière à pouvoir tourner autour d'un premier axe fictif qui est dans le plan tangent du moule.

5. Moule suivant la revendication 3 ou 4, caractérisé en ce que chaque tête est agencé de manière à pouvoir tourner autour d'un second axe qui passe par le point de contact de la tête avec la latte primaire.

6. Moule suivant la revendication 3, 4 ou 5, caractérisé en ce que chaque tête comprend des organes de préhension d'une latte montés de manière à pouvoir se décaler transversalement au plan de la rangée.

7. Moule suivant l'une des revendications 1 à 6, caractérisé en ce que les lattes primaires (8) sont constituées de stratifiés.

8. Procédé de fabrication d'un moule transformable suivant la revendication 7, caractérisé en ce qu'il consiste à fabriquer les lattes primaires stratifiées par mise en place successive de couches formant des lattes unitaires sur une première couche supportée par les têtes.

## Patentansprüche

1. Umbaufähige Form, insbesondere zum Ausformen von Objekten wie Bootskörpern mit nicht abrollbaren Oberflächen, deren erste Linien in ersten parallelen Ebenen liegen, während ihre zweiten Linien in zweiten parallelen Ebenen liegen, die die ersten Ebenen schneiden und die voneinander unterschiedliche Krümmungen aufweisen, mit einem Gestell (1, 2, 3) von demontierbaren Stäben (4), mit Reihen von Kopfteilträgern (5), die auf den Stäben (4) so montiert sind, dass sie sich daran in verschiedenen Stellungen befestigen lassen, wobei jede Reihe (5) in einer der ersten Ebenen liegt, und mit Kopfteilen (6), die auf den Enden der Kopfteilhalter (5) befestigt sind, dadurch gekennzeichnet, dass Primärlatten (8) von den Kopfteilen (6) gehalten werden und jede Primärlatte (8) längs einer ersten Linie liegt und von allen Kopteilen (6) der gleichen Reihe (5) getragen wird, und dadurch, dass Sekundärlatten (9), die sich mit den Primärlatten (8) kreuzen, auf diesen befestigt sind, wobei die Kopfteile (6) ein und derselben Reihe so orientiert sind, dass sie ihre Primärlatte (8) so verdrehen, dass jede Sekundärlatte (9) längs einer zweiten Linie liegt, und dadurch, dass Bahnen (10) auf den Sekundärlatten (9) aufgebracht sind.

2. Form nach Anspruch 1, dadurch gekennzeichnet, dass eine der linearen Abmessungen der Kontaktoberfläche zwischen einem Kopfteil (7) und einer Primärlatte (8) kleiner ist als ca. 1/500 des Biegeradius der Latte an dieser Stelle.

3. Form nach einem der Ansprüche 1 oder 2, dadurch gekennzeichnet, dass jedes Kopfteil (6) in zwei Richtungen orientierbar ist, die sich von derjenigen unterscheiden, in der der entsprechende Kopfteilhalter angeordnet ist.

4. Form nach Anspruch 3, dadurch gekennzeichnet, dass jedes Kopfteil so gebaut ist, dass es sich um eine erste fiktive Achse drehen kann, die in der zur Form tangentiellen Ebene liegt.

5. Form nach Anspruch 3 oder 4, dadurch gekennzeichnet, dass jedes Kopfteil so gebaut ist, dass es sich um eine zweite Achse drehen kann, die durch den Berührungspunkt zwischen dem Kopfteil und der Primärlatte läuft.

6. Form nach Anspruch 3, 4 oder 5, dadurch gekennzeichnet, dass jedes Kopfteil Bauteile zum Festhalten einer Latte aufweist, die so montiert sind, dass sie sich quer zur Ebene der Reihe verschieben lassen.

7. Form nach einem der Ansprüche 1 bis 6, dadurch gekennzeichnet, dass die Primärlatten (8) aus Schichtstoff hergestellt werden.

8. Verfahren zur Herstellung einer umbaufähigen Form nach Anspruch 7, dadurch gekennzeichnet, dass es darin besteht, die Primärlatten aus Schichtstoff durch eine sukzessive Aufbringung von Schichten zu bilden, die auf der ersten von den Kopfteilen gehaltenen Schicht Einzellatten bilden.

## Claims

1. Transformable mould-especially for moulding objects, such as ship's hulls, which have non developable surfaces, contain first lines extending in first parallel planes and second lines extending in second parallel planes which cross the first planes and are curved differently one from others which comprises a frame (1, 2, 3) of demountable bars (4), rows of head holders (5) mounted on the bars (4) so as to be capable of being fixed thereon in different positions, each row (5) extending in one of the said first planes, heads (6) held by the ends of the head holders (5), characterised by primary slats (8) supported by the heads (6), each slat (8) extending along one first line and supported by all the heads (6) of a row (5), by secondary slats (9) interlaced with the primary slats (8) and fixed thereto, the heads (6) of one row being oriented so that the primary slats (8) have a torsion such that each secondary slat (9) extends along one secondary line, and by sheets (10) applied on the secondary slats (9).

2. Mould as claimed in claim 1, wherein one of the linear dimensions of the contact surface of a head (7) with the primary slat (8) is less than approximately 1/500 th of the radius of curvature of the slat at this point.

3. Mould as claimed in claim 1 or 2, wherein each head (6) can be oriented in two directions which differ from that in which the head holder extends.

4. Mould as claimed in claim 3, wherein each head is arranged so that it can rotate around a first imaginary axis which is in the plane tangent to the mould.

5. Mould as claimed in claim 3 or 4, wherein each head is arranged so that it can rotate about a second axis which passes through the point of contact of the head with the primary slat.

6. Mould as claimed in claim 3, 4 or 5 wherein each head comprises gripping means for gripping a slat mounted so as to be able to be shifted transversely to the plane of the row in which it is situated.

7. Mould as claimed in claim 1 to 6, wherein the primary slats (8) consist of laminates.

8. Process for producing a convertible mould as claimed in claim 7, wherein it consists in producing the laminated primary slats by successively putting in layers forming single slats on top of a first layer supported by the heads.

FIG_1

FIG_2

FIG_3

FIG_4

FIG_5

0 176 385

FIG_6

FIG_7

FIG_8

11